(19) **Europäisches Patentamt / European Patent Office / Office européen des brevets**

(11)  **EP 2 509 249 A1**

(12)  # EUROPEAN PATENT APPLICATION
published in accordance with Art. 153(4) EPC

(43) Date of publication:
**10.10.2012 Bulletin 2012/41**

(21) Application number: **10791221.4**

(22) Date of filing: **13.04.2010**

(51) Int Cl.:
**H04L 5/14** (2006.01)

(86) International application number:
**PCT/CN2010/071734**

(87) International publication number:
**WO 2010/148715 (29.12.2010 Gazette 2010/52)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.12.2009 CN 200910252731**

(71) Applicant: **ZTE Corporation
Shenzhen, Guangdong 518057 (CN)**

(72) Inventor: **YAN, Jinfeng
Shenzhen
Guangdong 518057 (CN)**

(74) Representative: **Jansen, Cornelis Marinus et al
VEREENIGDE
Johan de Wittlaan 7
2517 JR Den Haag (NL)**

(54)  ## METHOD AND DEVICE FOR FREQUENCY SELECTIVE SCHEDULING USING THE CHANNEL SYMMETRY

(57)    The disclosure discloses a method and a device for frequency selective scheduling using channel symmetry. The disclosure can use the change of signal power of a Sounding Reference Signal (SRS) received at eNodeB end which is measured in the same band at different time, to adjust the Modulation and Coding Scheme (MCS) level or Signal to Interference plus Noise Ratio (SINR) corresponding to this band position, and thus to modify and provide the frequency selective scheduling information. The method and device receive the symmetry of useful signal power and obtain downlink frequency selective scheduling information by using Time Division Dual (TDD) system, thereby effectively improving the loss of the system performance caused by the inaccurate measurement of Channel Quality Indicator (CQI) due to feedback delay and feedback frequency, substantially increasing the probability of correct demodulation of issued data at receiving end, and effectively improve system performance.

Fig. 1

EP 2 509 249 A1

## Description

### Technical field

The disclosure relates to time division dual (TDD) downlink scheduling method in long term evolution (LTE), and in particular to a method and a device for facilitating LTE TDD to perform downlink frequency selective scheduling using TDD channel symmetry in the field of mobile communications.

### Background

In the TDD system, it is generally thought that uplink channel and downlink channel have symmetry and reciprocity. At present, one of the channel symmetry applications is that channel H obtained by uplink estimates downlink beam-forming weight. The second application is that Signal to Interference plus Noise Ratio (SINR) information of a Sounding Reference Signal (SRS) is used for predicting the SINR value of downlink channel; this method requires user equipment (UE) end to measure the interference level of downlink channel, then multiplies the transmit power of SRS by reciprocal of the interference power received at the UE end; therefore, the SINR information measured by uplink SRS at eNodeB (eNB) end has certain linear relationship with the SINR measured by downlink channel conditions, however, the defect existing in this method is that the calculation formula of SRS transmit power in protocol needs to be revised; therefore, this method cannot be adopted. Besides, downlink channel quality not only depends on the downlink channel, but also depends on the interference and noise received at the UE end; uplink channel quality not only depends on the uplink channel, but also depends on the interference and noise received at base station end. However, for the TDD system, the uplink channel and the downlink channel have reciprocity which does not exist between the noise and the interference; therefore, the method for predicting the downlink SINR information by directly using the SINR information obtained by uplink measurement has a great deviation.

At present, downlink scheduling is based on channel condition indicators fed back from the UE end, such as Rank Indicator (RI), Precoding Matrix Indicator (PMI) and Channel Quality Indicator (CQI) and the like; this method has a problem as follows: the channel conditions to which current sub-frame scheduling refers are downlink channel conditions measured by downlink sub-frame at the UE end at previous N (N is determined by the processing delay and the uplink-downlink matching ratio) moment, and then are reported by the UE end so that the eNB can use, the final downlink scheduling decision depends on the eNB; due to restricted time delay and feedback frequency of the CQI measurement and report, the timeliness and the accuracy of CQI report are limited; for frequency selective scheduling which depends on broadband and sub-band CQI report, the above reasons cause an inaccurate CQI measurement, more exactly, the measured CQI is not matched with current channel condition, therefore, the selection of resource position will be inaccurate in the frequency selective scheduling, thus, certain blindness is caused in resource allocation, the probability of correct data demodulation will be affected and the performance of system is reduced.

### Summary

The technical problem to be solved in the disclosure is to provide a method and a device for frequency selective scheduling using the channel symmetry, for solving the problem of inaccurate frequency selective information or non-timely feedback of frequency selective information in the frequency selective scheduling and further improving system performance by fully using the reciprocity between TDD uplink channel and TDD downlink channel.

In order to realize the purpose above, the technical scheme of the disclosure is realized by:

a method for frequency selective scheduling using channel symmetry, may include:

measuring, by a base station, received power of a SRS at base station end and preserving the latest two measurement information of SRS received power of each Resource Block (RB);

traversing each RB of each sub-band, when the measurement time of first SRS received power, in the measurement information of the latest two SRS received power of said each RB, approaches the measurement time of the CQI at said each RB, and the measurement time of second SRS received power approaches current scheduling time, then the measurement information of SRS received power of this RB is effective;

making, when the number of the RBs corresponding to the measurement information of effective SRS received power in each sub-band is greater than or equal to the predetermined ratio of the number of RBs in each sub-band, the measurement information of SRS received power corresponding to RB in the same sub-band equivalent to the measurement information of two SRS received powers;

adjusting, according to the change of said equivalent SRS received powers, the SINR information which is mapped from current effective CQI, and adjusting the Modulation and Coding Scheme (MCS) level corresponds to current effective CQI, and using adjusted said SINR information and MCS level for frequency selective scheduling.

preserving the latest two measurement information of SRS received power of each RB may include:

recording the measurement information of two SRS received powers every M RBs as the measurement information of SRS received power of each RB in the M RBs, wherein M is greater than or equal to 4.

The measurement time of first SRS received power, in the measurement information of the latest two SRS received power of said each RB, approaches the measurement time of the CQI of each RB, and the measurement time of second SRS received power approaches current scheduling time may include:

the absolute value of the difference between the measurement time of first SRS received power information and current effective CQI measurement time is less than a first threshold, the difference between current effective CQI measurement time and the measurement time of second SRS received power information is less than a second threshold.

Adjusting the SINR mapped from current effective CQI according to the change of SRS received power may include:

ordering

$$SINR'_{CurrentCQI} = (1 + \frac{P\_SRS(f\_subband,t_2) - P\_SRS(f\_subband,t_1)}{P\_SRS(f\_subband,t_1)} \times Factor) \times SINR_{CurrentCQI} ;$$

wherein, the Factor ranges from 0 to 1 and represents the weight of the influence of the change of SRS received power on the change of downlink channel condition; $P\_SRS(f\_subband,t_1)$ represents the measurement information of received power of equivalent SRS at time $t_1$; $P\_SRS(f\_subband,t_2)$ represents the measurement information of received power of equivalent SRS at time t2; $SINR_{CurrentCQI}$ represents the SINR value mapped from current effective CQI before change; $SINR'_{CurrentCQI}$ represents adjusted SINR value according to the change of SRS received power.

Adjusting the MCS level corresponds to current effective CQI may include:

ordering

$$I'_{MCS} = (1 + \frac{P\_SRS(f\_subband,t_2) - P\_SRS(f\_subband,t_1)}{P\_SRS(f\_subband,t_1)} \times Factor) \times I_{MCS} ;$$

adopting ceiling or floor or round-off if the calculated MCS level value is a decimal fraction, wherein, $I_{MCS}$ represents the level of MCS corresponding to current effective CQI; $I'_{MCS}$ represents the level of MCS adjusted according to the change of SRS received power.

A device for frequency selective scheduling using channel symmetry, may include:

an uplink measurement module configured to measure the received power of a SRS at base station end, preserve the latest two measurement information of SRS received power of each Resource Block (RB);

a measurement information effectiveness determination module configured to traverse each RB of each sub-band, and, when the measurement time of first SRS received power, in the measurement information of the latest two SRS received power of said each RB, approaches the measurement time of the CQI of each RB, and the measurement time of second SRS received power approaches current scheduling time, determine that the measurement information of the SRS received power of this RB is effective;

an equivalence module configured to, when the number of RBs corresponding to the measurement information of effective SRS received power in each sub-band is greater than or equal to the predetermined ratio of the number of the RBs in each sub-band, make the measurement information of two SRS received powers corresponding to RB in the same sub-band equivalent to the measurement information of two SRS received powers respectively;

a processing module may be configured to, according to the change of the two equivalent SRS received powers, adjust the SINR information which is mapped from current effective CQI and adjust the MCS level corresponds to current effective CQI, and use the adjusted SINR information and MCS level for frequency selective scheduling.

The uplink measurement module may be configured to record the measurement information of two SRS received powers every M RBs as the measurement information of the SRS received power of each RB in the M RBs, wherein M is greater than or equal to 4.

The measurement information effectiveness determination module may be configured to determine that the measurement information of SRS received power of this RB is effective, when the absolute value of the difference between the measurement time of first SRS received power information and current effective CQI measurement time is less than a first threshold, the difference between the current effective CQI measurement time and the measurement time of second SRS received power information is less than a second threshold.

The processing module may be configured to adjust the SINR mapped from current effective CQI according to the change of SRS received power, wherein, ordering

$$SINR'_{CurrentCQI} = (1 + \frac{P\_SRS(f\_subband, t_2) - P\_SRS(f\_subband, t_1)}{P\_SRS(f\_subband, t_1)} \times Factor) \times SINR_{CurrentCQI} ;$$

wherein, the Factor ranges from 0 to 1 and represents the weight of the influence of the change of SRS received power on the change of downlink channel condition; $P\_SRS(f\_subband, t_1)$ represents the measurement information of received power of equivalent SRS at time t1; $P\_SRS(f\_subband, t_2)$ represents the measurement information of received power of equivalent SRS at time t2; $SINR_{CurrentCQI}$ represents the SINR value mapped from current effective CQI before change; $SINR'_{CurrentCQI}$ represents adjusted SINR value according to the change of SRS received power.

The processing module may be configured to adjust the MCS level corresponds to current effective CQI, including, ordering

$$I'_{MCS} = (1 + \frac{P\_SRS(f\_subband, t_2) - P\_SRS(f\_subband, t_1)}{P\_SRS(f\_subband, t_1)} \times Factor) \times I_{MCS} ;$$

if the calculated MCS level value is a decimal fraction, adopts ceiling or floor or round-off, wherein, $I_{MCS}$ represents the level of MCS corresponding to current effective CQI; $I'_{MCS}$ represents the level of MCS adjusted according to the change of SRS received power.

The disclosure obtains downlink frequency selective scheduling information by using the symmetry while the TDD system receiving a useful signal power. It can effectively improve the loss of the system performance caused by the inaccurate measurement of CQI due to feedback delay and feedback frequency by fully using TDD channel symmetry, so as to substantially increase the probability of correct demodulation of issued data at receiving end, and effectively improve system performance.

**Brief description of the drawings**

Fig. 1 shows a flowchart of a method for frequency selective scheduling using channel symmetry according to the embodiment of the disclosure;
Fig. 2 shows a flowchart of frequency selective scheduling by using uplink information to facilitate downlink according to an applicable example of the disclosure;

Fig. 3 shows a time sequence diagram of CQI and SRS.

**Detailed description**

Uplink channel estimation can be obtained through a SRS or a demodulation reference signal (DMRS); however, since the DMRS and the uplink data are transmitted simultaneously, only the channel of a part corresponding to data can be estimated; therefore, SRS is usually adopted to estimate channel and uplink signal power.

The main idea of the disclosure is that: using the change tendency of the signal power of a SRS received at eNodeB end which is measured in the same band at different time, to adjust the MCS level or SINR corresponding to this band position, and thus to modify the frequency selective scheduling so as to provide the frequency selective scheduling information. This method is applicable for the condition in which the measurement information of the received power of the SRS in the same band can be obtained twice within a relative short time threshold, the measurement time of first SRS received power approaches the measurement time of the CQI of this band domain and the measurement time of second SRS received power approaches current scheduling time.

Specifically, in the disclosure, the change tendency of the signal power of a SRS of each RB in each sub-band received at eNodeB end which is measured at different time is used for adjusting the modulation and coding scheme (MCS) level or SINR corresponding to this band position.

The premise of this method is that: SRS signal transmit power is unified and system is an interference-limited system.

The implementation of technical scheme is further illustrated in detail below in conjunction with the accompanying drawings:

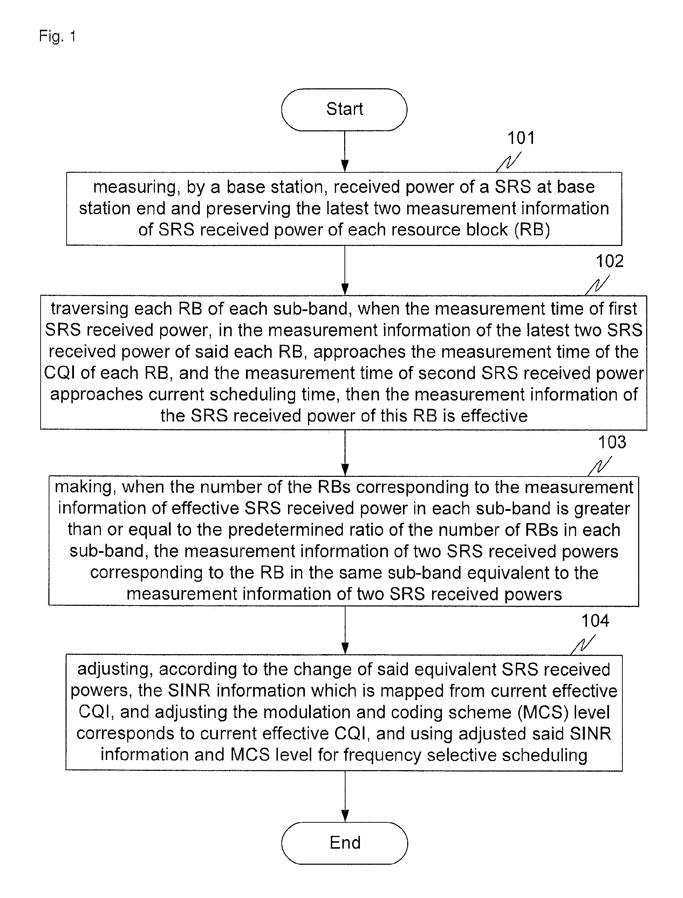

a specific method is as follows: as shown in Fig. 1, a method for frequency selective scheduling using channel symmetry includes:

Step 101: measuring, by a base station, received power of a SRS at base station end and preserving the latest two measurement information of SRS received power of each RB;

Step 102: traversing each RB of each sub-band, when the measurement time of first SRS received power, in the measurement information of the latest two SRS received power of said each RB, approaches the measurement time of the CQI of each RB, and the measurement time of second SRS received power approaches current scheduling time, then the measurement information of SRS received power of this RB is effective;

Step 103: making, when the number of the RBs corresponding to the measurement information of effective SRS received power in each sub-band is greater than or equal to the predetermined ratio of the number of RBs in each sub-band, the measurement information of two SRS received powers corresponding to effective RB in the same sub-band equivalent to the measurement information of two SRS received powers respectively, so as to be regarded as two SRS received power measurement information in the sub-band;

Step 104: adjusting, according to the change of said equivalent SRS received powers, the SINR information which is mapped from current effective CQI, and adjusting the MCS level corresponds to current effective CQI, and using adjusted said SINR information and MCS level for frequency selective scheduling.

The effective CQI generally is: the latest CQI until current scheduling time. Of course, the effective CQI in actual application is not limited to the definition in the disclosure and can be adjusted in accordance with actual requirement.

In a preferable embodiment of the disclosure, preserving the latest two measurement information of SRS received power of each RB in step 101 includes: every M RBs record the measurement information of two SRS received powers as the measurement information of SRS received power of each RB in the M RBs, wherein M is greater than or equal to 4.

In a preferable embodiment of the disclosure, in step 102, the measurement time of first SRS received power, in the measurement information of the latest two SRS received power of said each RB, approaches the measurement time of the CQI of each RB, and the measurement time of second SRS received power approaches current scheduling time includes:

the absolute value of the difference between the measurement time of first SRS received power information and current effective CQI measurement time is less than a first threshold, the difference between current effective CQI measurement time and the measurement time of second SRS received power information is less than a second threshold.

In a preferable embodiment of the disclosure, adjusting the SINR mapped from current effective CQI according to the change of SRS received power in step 104 includes: ordering

$$SINR'_{CurrentCQI} = (1 + \frac{P\_SRS(f\_subband, t_2) - P\_SRS(f\_subband, t_1)}{P\_SRS(f\_subband, t_1)} \times Factor) \times SINR_{CurrentCQI};$$

wherein, the Factor ranges from 0 to 1 and represents the weight of the influence of the change of SRS received power on the change of downlink channel condition; $P\_SRS(f\_subband, t_1)$ represents the measurement information of received power of equivalent SRS at time $t_1$; $P\_SRS(f\_subband, t_2)$ represents the measurement information of received power of equivalent SRS at time t2; $SINR_{CurrentCQI}$ represents the SINR mapped from current effective CQI before change; $SINR'_{CurrentCQI}$ represents adjusted SINR value according to the change of SRS received power. Then a new CQI is mapped according to the adjusted SINR value.

In another preferable embodiment of the disclosure, adjusting the MCS level corresponds to current effective CQI in step 104 includes:

ordering

$$I'_{MCS} = (1 + \frac{P\_SRS(f\_subband, t_2) - P\_SRS(f\_subband, t_1)}{P\_SRS(f\_subband, t_1)} \times Factor) \times I_{MCS};$$

if this value is a decimal fraction, adopts ceiling or floor or round-off, wherein, $I_{MCS}$ represents the level of MCS corresponding to current effective CQI; $I'_{MCS}$ represents the level of MCS adjusted according to the change of SRS received power.

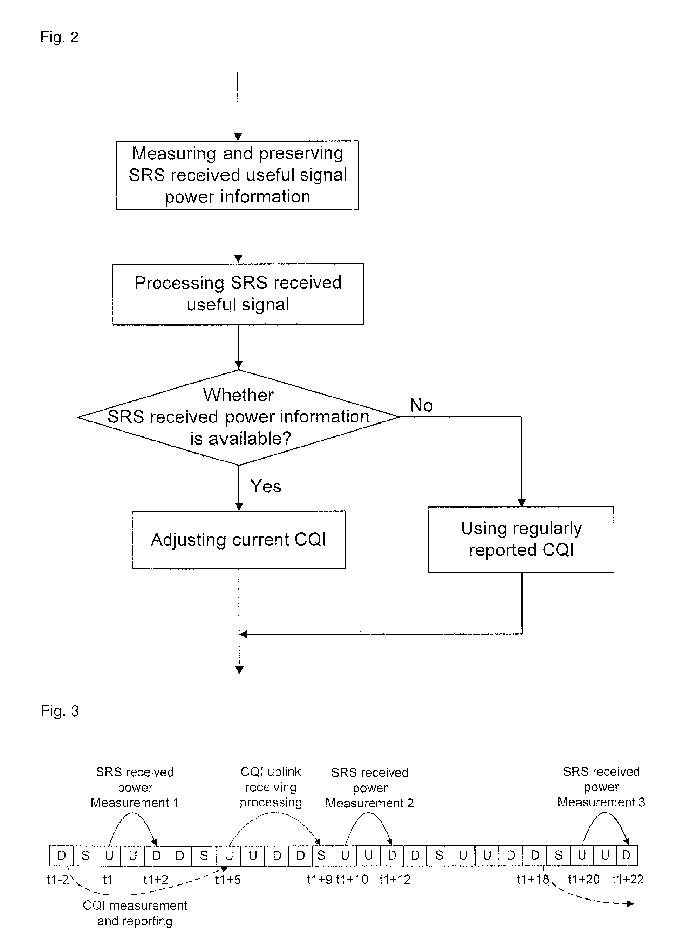

The technical scheme of the disclosure is schematically illustrated by an example in actual application; referring to Fig. 2, in an applicable example of the disclosure, the method includes:

1. uplink information measurement and preservation: an uplink measurement module at base station end reports the signal power $P\_SRS$ of the SRS at the base station end; the granularity for reporting SRS measurement information is M (M is greater than or equal to 4), every M RBs record the measurement information of two SRS received powers as $P\_SRS(f,t)$, $P\_SRS(f,t)$ represents the measurement information of SRS received power on M continuous RBs, wherein f represents initial frequency domain position corresponding to $P\_SRS(f,t)$, t represents information measurement time; the measurement information of SRS received power of each RB is marked as $P\_SRS(f',t)$, wherein, f' corresponds to a single RB.

In the disclosure, it is necessary to preserve measurement information of SRS received power in the same band at latest two moment, wherein for a single RB, the measurement information of SRS received power at latest two moment are marked as $P\_SRS(f',t_1')$, and $P\_SRS(f',t_2')$, respectively, wherein, $t_1'$ and $t_2'$ respectively correspond to the measurement time for obtaining the measurement information of SRS received power at latest two adjacent times to the same RB.

2. uplink information process:

traversing each sub-band

1) judging each RB in the sub-band as follows: if the absolute value of the difference between the measurement time $t_1$ of first SRS received power information and current effective CQI measurement time is less than a first threshold $T_1$, if the difference between current effective CQI measurement time and the measurement time $t_2'$ of second SRS received power information is less than a second threshold $T_2$, then the measurement information of SRS received power of this RB is effective. The specific first threshold and second threshold are determined according to the coherence time of channel.

2) if the number of RBs corresponding to the measurement information of effective SRS received power in each sub-band satisfies: $Effective\_RBNum \geq \eta \times RBNum\_perSubband$, executing step 3), otherwise, entering into step 1);

wherein, *Effective_RBNum* represents the number of RBs judged to be effective in the sub-band by synchronous step 1); *RBNum_perSubband* represents the number of RBs contained in each sub-band; $\eta$ represents a proportion parameter and the value thereof can be obtained by emulation, wherein one value range is (0.5,1] in this disclosure.

3) information equivalence: the measurement information of SRS received power corresponding to multiple RBs in the same sub-band are equivalent to the measurement information of two SRS received powers, wherein the measurement information of SRS received power after equivalence at first moment is marked as $P\_SRS(f\_subband,t_1)$; the measurement information of SRS received power after equivalence at second moment is marked as $P\_SRS(f\_subband,t_2)$, wherein $f\_subband$ represents initial frequency domain position of corresponding sub-band.

3. adjustment to CQI by effective measurement information:

the basic principle for adjusting MCS is to lower and try not to increase, the following two methods can be adopted:

1), adjusting SINR mapped from current effective CQI according to the change of SRS received signal power, that is, $SINR_{CurrentCQI}$, wherein the adjusted $SINR_{CurrentCQI}$ is represented by the following formula:

$$SINR'_{CurrentCQI} = (1+\frac{P\_SRS(f\_subband,t_2)-P\_SRS(f\_subband,t_1)}{P\_SRS(f\_subband,t_1)} \times Factor) \times SINR_{CurrentCQI} \qquad ;$$

wherein, the Factor ranges from 0 to 1 and represents the weight of the influence of the change of the SRS received power on the change of downlink channel condition; then remapping the corresponding MCS level of $SINR'_{CurrentCQI}$.

2), adjusting the MCS level corresponding to current effective CQI according to the change of SRS received signal power;

$$I'_{MCS} = (1+\frac{P\_SRS(f\_subband,t_2)-P\_SRS(f\_subband,t_1)}{P\_SRS(f\_subband,t_1)} \times Factor) \times I_{MCS} \quad ,$$

wherein, if this value is a decimal fraction, adopts ceiling or floor or round-off according to different policies; then using the information for frequency selective scheduling.

The disclosure further discloses a device for frequency selective scheduling using channel symmetry, including:

an uplink measurement module configured to measure the received power of a SRS at base station end, preserve the latest two measurement information of SRS received power of each RB;
a measurement information effectiveness determination module configured to traverse each RB of each sub-band, and, when the measurement time of first SRS received power, in the measurement information of the latest two SRS received power of said each RB, approaches the measurement time of the CQI of each RB, and the measurement time of second SRS received power approaches current scheduling time, determine that the measurement information of SRS received power of this RB is effective;
an equivalence module configured to, when the number of RBs corresponding to the measurement information of effective SRS received power in each sub-band is greater than or equal to the predetermined ratio of the number of the RBs in each sub-band, make the measurement information of SRS received powers corresponding to RB in the same sub-band equivalent to the measurement information of two SRS received powers;
a processing module configured to, according to the change of the two equivalent SRS received powers, adjust the SINR information which is mapped from current effective CQI and adjust the MCS level corresponds to current effective CQI, and use the adjusted SINR information and MCS level for frequency selective scheduling.

In a preferable embodiment of the disclosure, the uplink measurement module is configured to record the measurement information of two SRS received powers every M RBs as the measurement information of SRS received power of each RB in the M RBs, wherein M is greater than or equal to 4.

In a preferable embodiment of the disclosure,
the measurement information effectiveness determination module is configured to determine that the measurement information of SRS received power of this RB is effective, when the absolute value of the difference between the measurement time of first SRS received power information and current effective CQI measurement time is less than a first threshold, the difference between current effective CQI measurement time and the measurement time of second SRS received power information is less than a second threshold.

In a preferable embodiment of the disclosure,
the processing module is further configured to adjust the SINR mapped from current effective CQI according to the change of SRS received power, specifically, ordering

$$SINR'_{CurrentCQI} = (1 + \frac{P\_SRS(f\_subband, t_2) - P\_SRS(f\_subband, t_1)}{P\_SRS(f\_subband, t_1)} \times Factor) \times SINR_{CurrentCQI} ;$$

wherein, the Factor ranges from 0 to 1 and represents the weight of the influence of the change of SRS received power on the change of downlink channel condition; $P\_SRS(f\_subband, t_1)$ represents the measurement information of received power of equivalent SRS at time t1; $P\_SRS(f\_subband, t_2)$ represents the measurement information of received power of equivalent SRS at time t2; $SINR_{CurrentCQI}$ represents the SINR value mapped from current effective CQI before change; $SINR'_{CurrentCQI}$ represents adjusted SINR value according to the change of SRS received power.

In another preferable embodiment of the disclosure,
the processing module is further configured to adjust the MCS level corresponds to current effective CQI, including, ordering

$$I'_{MCS} = (1 + \frac{P\_SRS(f\_subband, t_2) - P\_SRS(f\_subband, t_1)}{P\_SRS(f\_subband, t_1)} \times Factor) \times I_{MCS} ;$$

wherein, if this value is a decimal fraction, adopts ceiling or floor or round-off, wherein, $I_{MCS}$ represents the level of MCS corresponding to current effective CQI; $I'_{MCS}$ represents the level of MCS adjusted according to the change of SRS received power.

The technical scheme of the disclosure is schematically illustrated below again by an example in the specific application.

Assuming that a downlink (DL) system has 10M of bandwidth, 50 RBs and 20ms of broadband CQI report period, assuming that the report period of the same sub-band is 20ms too; the uplink-downlink matching ratio is 1, assuming that SRS report bandwidth of certain UE in a cell is configured as 48RB, the SRS bandwidth of UE is 48RB too, report period is 10ms, the sub-frame offset of CQI is 0, the sub-frame offset of SRS is 2; the RB allocation type of UE is Localized Virtual Resource Blocks (LVRB); the granularity of SRS measurement is 4RB, the following statement is illustrated with reference to Fig. 3.

1) in the condition of the uplink-downlink matching ratio being 1, i.e., the first U of DSUUDDSUUD (D represents a downlink sub-frame, S represents a special sub-frame, U represents an uplink sub-frame) measures the received signal power (granularity is 4RB) of SRS; given the receiving time of the uplink sub-frame is t1, then the SRS information can be used for scheduling at moment t1+2; it is measured that the corresponding received signal power at 48RB is $P\_SRS(f,t1)$, wherein, each $f$ corresponds to initial frequency domain position of 4 RBs; $P\_SRS(f,t2)$ is obtained by measurement in next period of 10ms, wherein, the corresponding uplink sub-frame is t1+10, then the SRS information can be used for scheduling at moment t1 +12; the measurement information is equivalent to $P\_SRS(f',t1)$, $P\_SRS(f',t2)$, based on sub-band position, wherein, $f'$ represents the starting point of the sub-band position.

2) the CQI measurement time of certain sub-band is t1-2, effective time is t1+9, the corresponding CQI measurement time of next time of the sub-band is t1+18 and effective time is t1+29.

3) from t1+9 to t1+12, reported CQI value is used.

4) from t1+12 to t1+22, the CQI (corresponding to $I_{MCS}$) which is corrected according to the measurement information of SRS received power is used, assuming that the CQI is used for adjusting MCS level, then

$$I'_{MCS} = \left\lceil (1 + \frac{P\_SRS(f'\_subband, t1) - P\_SRS(f'\_subband, t2)}{P\_SRS(f'\_subband, t1)} \times Factor) \times I_{MCS} \right\rceil.$$

5) from t1+22 to t1+29, since there is new measurement data $P\_SRS(f,t3)$, of SRS received power, a further adjustment is needed,

$$I''_{MCS} = \left\lceil (1 + \frac{P\_SRS(f'\_subband, t1) - P\_SRS(f'\_subband, t2)}{P\_SRS(f'\_subband, t1)} \times Factor) \times I'_{MCS} \right\rceil.$$

6) when selecting the RB position allocated by a UE in scheduling process, the RB position is selected according to the RB position corresponding to the size of sub-band CQI, and the greater MCS level is preferred.

The disclosure discloses a method and a device for facilitating downlink non-frequency selective scheduling by using uplink information, which can improve correct transmission probability so as to improve the throughput of system. However, the above is only the embodiment of the disclosure and not intended to limit the disclosure. For those skilled in the art, various modifications and changes can be made to the disclosure. Any modification, equivalent substitute and improvement within the spirit and principle of the disclosure are deemed to be included within the scope of the disclosure.

## Claims

1. A method for frequency selective scheduling using channel symmetry, comprising:

   measuring, by a base station, received power of a Sounding Reference Signal (SRS) at base station end and preserving the latest two measurement information of SRS received power of each Resource Block (RB);
   traversing each RB of each sub-band, whern the measurement time of first SRS received power, in the measurement information of the latest two SRS received power of said each RB, approaches the measurement time of the Channel Quality Indicator (CQI) of each RB, and the measurement time of second SRS received power approaches current scheduling time, then the measurement information of SRS received power of this RB is effective;
   making, when the number of the RBs corresponding to the measurement information of effective SRS received power in each sub-band is greater than or equal to the predetermined ratio of the number of RBs in each sub-band, the measurement information of SRS received power corresponding to RB in the same sub-band equivalent to the measurement information of two SRS received powers;
   adjusting, according to the change of said equivalent SRS received powers, the Signal to Interference plus Noise Ratio (SINR) information which is mapped from current effective CQI, and adjusting the Modulation and Coding Scheme (MCS) level corresponds to current effective CQI, and using adjusted said SINR information and MCS level for frequency selective scheduling.

2. The method according to claim 1, wherein preserving the latest two measurement information of SRS received power of each RB comprises:

   recording, by every M RBs, the measurement information of two SRS received powers as the measurement information of SRS received power of each RB in the M RBs, wherein M is greater than or equal to 4.

3. The method according to claim 1, wherein the measurement time of first SRS received power, in the measurement information of the latest two SRS received power of said each RB, approaches the measurement time of the CQI of each RB, and the measurement time of second SRS received power approaches current scheduling time comprises:

the absolute value of the difference between the measurement time of first SRS received power information and current effective CQI measurement time is less than a first threshold, the difference between current effective CQI measurement time and the measurement time of second SRS received power information is less than a second threshold.

4. The method according to claim 1, wherein adjusting the SINR mapped from current effective CQI according to the change of SRS received power comprises:

ordering

$$SINR'_{CurrentCQI} = (1 + \frac{P\_SRS(f\_subband, t_2) - P\_SRS(f\_subband, t_1)}{P\_SRS(f\_subband, t_1)} \times Factor) \times SINR_{CurrentCQI};$$

wherein, the Factor ranges from 0 to 1 and represents the weight of the influence of the change of SRS received power on the change of downlink channel condition; $P\_SRS(f\_subband, t_1,)$ represents the measurement information of received power of equivalent SRS at time t1; $P\_SRS(f\_subband, t_2)$ represents the measurement information of received power of equivalent SRS at time t2; $SINR_{CurrentCQI}$ represents the SINR value mapped from current effective CQI before change; $SINR'_{CurrentCQI}$ represents adjusted SINR value according to the change of SRS received power.

5. The method according to claim 4, wherein adjusting the MCS level corresponds to current effective CQI comprises:

ordering

$$I'_{MCS} = (1 + \frac{P\_SRS(f\_subband, t_2) - P\_SRS(f\_subband, t_1)}{P\_SRS(f\_subband, t_1)} \times Factor) \times I_{MCS};$$

adopting ceiling or floor or round-off if the calculated MCS level value is a decimal fraction, wherein, $I_{MCS}$ represents the level of MCS corresponding to current effective CQI; $I'_{MCS}$ represents the level of MCS adjusted according to the change of SRS received power.

6. A device for frequency selective scheduling using channel symmetry, comprising:

an uplink measurement module configured to measure the received power of a SRS at base station end, preserve the latest two measurement information of SRS received power of each Resource Block (RB);
a measurement information effectiveness determination module configured to traverse each RB of each sub-band, and, when the measurement time of first SRS received power, in the measurement information of the latest two SRS received power of said each RB, approaches the measurement time of the CQI of each RB, and the measurement time of second SRS received power approaches current scheduling time, determine that the measurement information of SRS received power of this RB is effective;
an equivalence module configured to, when the number of RBs corresponding to the measurement information of effective SRS received power in each sub-band is greater than or equal to the predetermined ratio of the number of the RBs in each sub-band, make the measurement information of two SRS received powers corresponding to RB in the same sub-band equivalent to the measurement information of two SRS received powers respectively;
a processing module configured to, according to the change of the two equivalent SRS received powers, adjust the SINR information which is mapped from current effective CQI and adjust the MCS level corresponds to current effective CQI, and use the adjusted SINR information and MCS level for frequency selective scheduling.

7. The device according to claim 6, wherein
the uplink measurement module is configured to record the measurement information of two SRS received powers every M RBs as the measurement information of SRS received power of each RB in the M RBs, wherein M is greater than or equal to 4.

**8.** The device according to claim 6, wherein
the measurement information effectiveness determination module is configured to determine that the measurement information of SRS received power of this RB is effective, when the absolute value of the difference between the measurement time of first SRS received power information and current effective CQI measurement time is less than a first threshold, the difference between the current effective CQI measurement time and the measurement time of second SRS received power information is less than a second threshold.

**9.** The device according to claim 6, wherein
the processing module is configured to adjust the SINR mapped from current effective CQI according to the change of SRS received power, specifically, ordering

$$SINR'_{CurrentCQI} = (1 + \frac{P\_SRS(f\_subband, t_2) - P\_SRS(f\_subband, t_1)}{P\_SRS(f\_subband, t_1)} \times Factor) \times SINR_{CurrentCQI};$$

wherein, the Factor ranges from 0 to 1 and represents the weight of the influence of the change of SRS received power on the change of downlink channel condition; $P\_SRS(f\_subband, t_1,)$ represents the measurement information of received power of equivalent SRS at time t1; $P\_SRS(f\_subband, t_2,)$ represents the measurement information of received power of equivalent SRS at time t2; $SINR_{CurrentCQI}$ represents the SINR value mapped from current effective CQI before change; $SINR_{CurrentCQI}$ represents adjusted SINR value according to the change of SRS received power.

**10.** The device according to claim 9, wherein
the processing module is configured to adjust the MCS level corresponds to current effective CQI, comprising; ordering

$$I'_{MCS} = (1 + \frac{P\_SRS(f\_subband, t_2) - P\_SRS(f\_subband, t_1)}{P\_SRS(f\_subband, t_1)} \times Factor) \times I_{MCS};$$

if the calculated MCS level value is a decimal fraction, adopts ceiling or floor or round-off, wherein, $I_{MCS}$ represents the level of MCS corresponding to current effective CQI; $I'_{MCS}$ represents the level of MCS adjusted according to the change of SRS received power.

Fig. 1

```
                    ┌─────────────┐
                    │    Start    │
                    └──────┬──────┘
                           │           101
                           ▼
┌──────────────────────────────────────────────────────┐
│ measuring, by a base station, received power of a SRS │
│ at base station end and preserving the latest two     │
│ measurement information of SRS received power of each  │
│ resource block (RB)                                    │
└──────────────────────────────────────────────────────┘
                           │           102
                           ▼
┌──────────────────────────────────────────────────────┐
│ traversing each RB of each sub-band, when the          │
│ measurement time of first SRS received power, in the   │
│ measurement information of the latest two SRS received │
│ power of said each RB, approaches the measurement time │
│ of the CQI of each RB, and the measurement time of     │
│ second SRS received power approaches current           │
│ scheduling time, then the measurement information of   │
│ the SRS received power of this RB is effective          │
└──────────────────────────────────────────────────────┘
                           │           103
                           ▼
┌──────────────────────────────────────────────────────┐
│ making, when the number of the RBs corresponding to    │
│ the measurement information of effective SRS received   │
│ power in each sub-band is greater than or equal to the  │
│ predetermined ratio of the number of RBs in each        │
│ sub-band, the measurement information of two SRS        │
│ received powers corresponding to the RB in the same     │
│ sub-band equivalent to the measurement information of   │
│ two SRS received powers                                 │
└──────────────────────────────────────────────────────┘
                           │           104
                           ▼
┌──────────────────────────────────────────────────────┐
│ adjusting, according to the change of said equivalent   │
│ SRS received powers, the SINR information which is      │
│ mapped from current effective CQI, and adjusting the    │
│ modulation and coding scheme (MCS) level corresponds    │
│ to current effective CQI, and using adjusted said SINR  │
│ information and MCS level for frequency selective        │
│ scheduling                                              │
└──────────────────────────────────────────────────────┘
                           │
                           ▼
                    ┌─────────────┐
                    │     End     │
                    └─────────────┘
```

Fig. 2

```
                          │
                          ▼
          ┌───────────────────────────────┐
          │    Measuring and preserving    │
          │   SRS received useful signal   │
          │      power information         │
          └───────────────────────────────┘
                          │
                          ▼
          ┌───────────────────────────────┐
          │    Processing SRS received     │
          │         useful signal          │
          └───────────────────────────────┘
                          │
                          ▼
               ◇ Whether                     No
          ◇ SRS received power information ◇ ─────┐
               ◇ is available? ◇                  │
                          │                        │
                        Yes                        │
                          ▼                        ▼
          ┌──────────────────────┐   ┌──────────────────────┐
          │  Adjusting current   │   │   Using regularly     │
          │        CQI           │   │    reported CQI       │
          └──────────────────────┘   └──────────────────────┘
                          │                        │
                          ◄────────────────────────┘
                          │
                          ▼
```

Fig. 3

| SRS received power Measurement 1 | CQI uplink receiving processing | SRS received power Measurement 2 | | SRS received power Measurement 3 |

```
┌─┬─┬─┬─┬─┬─┬─┬─┬─┬─┬─┬─┬─┬─┬─┬─┬─┬─┬─┬─┬─┬─┬─┬─┐
│D│S│U│U│D│D│S│U│U│D│D│S│U│U│D│D│S│U│U│D│D│S│U│U│D│
└─┴─┴─┴─┴─┴─┴─┴─┴─┴─┴─┴─┴─┴─┴─┴─┴─┴─┴─┴─┴─┴─┴─┴─┘
t1-2  t1   t1+2   t1+5    t1+9 t1+10 t1+12        t1+18  t1+20 t1+22
```

CQI measurement
and reporting

# INTERNATIONAL SEARCH REPORT

| | International application No. |
|---|---|
| | PCT/CN2010/071734 |

**A. CLASSIFICATION OF SUBJECT MATTER**

H04L5/14 (2006.01) i

According to International Patent Classification (IPC) or to both national classification and IPC

**B. FIELDS SEARCHED**

Minimum documentation searched (classification system followed by classification symbols)

IPC: H04L5/-

Documentation searched other than minimum documentation to the extent that such documents are included in the fields searched

Electronic data base consulted during the international search (name of data base and, where practicable, search terms used)

CNPAT; WPI; EPODOC; CNKI; INTERNET

Symmetr+, frequency, select+, dispatch, availab+, effect+, equivalent, adjust, uplink, SINR, MCS, CQI, RB, SRS, reserve, power

**C. DOCUMENTS CONSIDERED TO BE RELEVANT**

| Category* | Citation of document, with indication, where appropriate, of the relevant passages | Relevant to claim No. |
|---|---|---|
| A | CN101595670A ( TELEFONAKTIEBOLAGET ERICSSON L M ) 02 Dec. 2009(02.12.2009) see the whole document | 1-10 |
| A | CN1998247A ( WALTICAL SOLUTIONS INC FORMERL ) 11 Jul. 2007(11.07.2007) see the whole document | 1-10 |
| A | CN101267654A ( DA TANG MOBILE COMMUNICATION APPARATUS ) 17 Sep. 2008 (17.09.2008) see the whole document | 1-10 |
| A | US6859622B1 ( NORTEL NETWORKS LTD ) 22 Feb. 2005(22.02.2005) see the whole document | 1-10 |

☐ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 Aug. 2010(11.08.2010) | **09 Sep. 2010 (09.09.2010)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | **SU, Shanshan** Telephone No. (86-10)**62411886** |

Form PCT/ISA /210 (second sheet) (July 2009)

## INTERNATIONAL SEARCH REPORT
Information on patent family members

| International application No. |
| --- |
| PCT/CN2010/071734 |

| Patent Documents referred in the Report | Publication Date | Patent Family | Publication Date |
| --- | --- | --- | --- |
| CN101595670A | 02.12.2009 | WO2008054267A | 08.05.2008 |
| | | EP2078365A | 15.07.2009 |
| | | JP2010508695T | 18.03.2010 |
| | | US2010098030A1 | 22.04.2010 |
| | | INKOLNP200902035E | 19.06.2009 |
| CN1998247A | 11.07.2007 | WO2006004968A | 12.01.2006 |
| | | US2008039129A | 14.02.2008 |
| CN101267654A | 17.09.2008 | None | |
| US6859622B1 | 22.02.2005 | None | |

Form PCT/ISA /210 (patent family annex) (July 2009)